# EUROPÄISCHE PATENTANMELDUNG

(11) **EP 2 533 032 A1**
(43) Veröffentlichungstag der Anmeldung: **12.12.2012**
(21) Anmeldenummer: 12165437.0
(22) Anmeldetag: 25.04.2012
(51) Int. Cl.: G01N 21/55, G01N 21/86, G01N 21/958

(54) **Messverfahren und Messvorrichtung zur Ermittlung von Transmissions- und/oder Reflektionseigenschaften**

(30) Priorität: 09.06.2011 DE 102011077290
(71) Anmelder: Carl Zeiss Microscopy GmbH, 07745 Jena (DE)
(72) Erfinder: Margraf, Jörg, 07749 Jena (DE); Lamparter, Peter, 07743 Jena (DE)
(74) Vertreter: Geyer, Fehners & Partner

(57) **Zusammenfassung**

Die Erfindung bezieht sich auf ein optisches Messverfahren zur Ermittlung der Transmissions- und/oder Reflektionseigenschaften vorzugsweise von großflächigen transluzenten Objekten (1). Es ist insbesondere anwendbar zur Prozess- und Qualitätskontrolle bei der Herstellung von oberflächenbeschichteten Substraten (1). Gegenstand der Erfindung ist weiterhin eine optische Messvorrichtung zur Ausübung des erfindungsgemäßen Verfahrens.

Erfindungsgemäß werden die Transmissions- und Reflektionseigenschaften ermittelt, indem sequentiell:
- eine erste Großfläche (3) des Objektes (1) mit einer ersten Beleuchtungseinrichtung (9) beleuchtet und dabei mit einem Fotodetektor (14) die totale Transmission gemessen wird,
- die zweite, der ersten parallel gegenüberliegende Großfläche (2) des Objektes (1) mit einer zweiten Beleuchtungseinrichtung (7) beleuchtet und dabei mit einem Fotodetektor (4) die diffuse Transmission gemessen wird, und optional
- die ersten Großfläche (3) des Objektes (1) mit der ersten Beleuchtungseinrichtung (9) beleuchtet und dabei mit dem Fotodetektor (4) die Reflektion gemessen wird, und / oder
- die zweite Großfläche (2) des Objektes (1) mit der zweiten Beleuchtungseinrichtung (7) beleuchtet und dabei mit dem Fotodetektor (14) die Reflektion gemessen wird.

## Beschreibung

### Gebiet der Erfindung

Die Erfindung bezieht sich auf ein optisches Messverfahren zur Ermittlung der Transmissions- und/oder Reflektionseigenschaften vorzugsweise von großflächigen transluzenten Objekten. Es ist insbesondere anwendbar zur Prozess- und Qualitätskontrolle bei der Herstellung von oberflächenbeschichteten Substraten. Gegenstand der Erfindung ist weiterhin eine optische Messvorrichtung, die zur Ausübung des erfindungsgemäßen Verfahrens geeignet ist.

### Stand der Technik

Bei der Herstellung von beschichteten transluzenten Materialien, wie beispielsweise mit elektrisch leitfähigen Schichten versehene Substrate für die Photovoltaik, ist die Kontrolle der transparenten und reflektiven Eigenschaften des Substrates vor allem hinsichtlich der Erzielung eines optimalen Wirkungsgrades bei der Umsetzung der Solarstrahlung in Elektrizität von Bedeutung.

Dabei ist die Trübung, auch unter der Bezeichnung HAZE oder Großwinkelstreuung bekannt, ein wichtiger Kennwert. Die Trübung ist nach dem internationalen Standard ASTM D 1003 genormt als der prozentuale Anteil des durch ein transluzentes Objekt hindurchtretenden Lichts, der im Objekt um mehr als 2,5° in seiner Ausbreitungsrichtung abgelenkt und daher beim Durchgang durch das Objekt, etwa aufgrund der Oberflächenrauhigkeit, aus einem gerichteten Strahlenbündel herausgestreut wird.

Laut ASTM D 1003 kann die Trübung von transluzenten Objekten ermittelt werden, indem das Objekt vor der Lichteintrittsöffnung einer Ulbrichtkugel positioniert und von der der UIbrichtkugel gegenüber liegenden Objektseite her so beleuchtet wird, dass das Beleuchtungslicht das Objekt durchstrahlt und in die Ulbrichtkugel eintritt. In die Ulbrichtkugel ist ein Fotodetektor integriert, der das durchdringende Licht empfängt und in ein Messsignal wandelt. Die Detektionsrichtung dieses Fotosensors schließt dabei mit der Normalen der Objektoberfläche, die zugleich eine Messachse bildet, einen vorgegebenen Winkel ein.

In einer davon abweichenden, ebenfalls in dem Standard ASTM D 1003 vorgegebenen Messmethode wird die Ulbrichtkugel selbst als Beleuchtungseinrichtung genutzt. Mittels der Ulbrichtkugel wird das vor deren Lichtaustrittsöffnung positionierte Objekt mit diffusem Licht beleuchtet. In diesem Fall befindet sich der Fotodetektor auf der anderen, der Ulbrichtkugel gegenüber liegenden Seite des Objektes.

Im letzteren Fall ist innerhalb der Ulbrichtkugel eine Lichtfalle vorgesehen, die aktivierbar ist und im aktiven Zustand den gerichteten Anteil des Lichts so ausblendet, dass dieser den Fotodetektor nicht erreicht. Mit der abwechselnden Aktivierung oder Deaktivierung der Lichtfalle werden zwei verschiedene Transmissionswerte ermittelt. Einer dieser Werte liefert ein Maß für die diffuse Transmission Tdiffus, bei der das Licht durch den Einfluss des Objektes im Winkel > 2,5° gestreut wird, der andere Wert liefert ein Maß für die Totaltransmission Ttotal, bei der keine Lichtstreuung durch das Objekt oder nur Streuung in einem Winkel ≤ 2,5° erfolgt. Aus diesen beiden Werten wird die Trübung des Objektes bestimmt nach der Funktion der Funktion HAZE = Tdiffus/Ttotal*100%.

In DE 100 10 213 B4 ist eine "Messvorrichtung, insbesondere zur Qualitätsüberwachung bei kontinuierlichen Prozessen" beschrieben, die nach dem Prinzip der Spektroskopie arbeitet. Diese Messvorrichtung weist einen Messkopf mit einer Ulbrichtkugel auf, die zur diffusen Beleuchtung des Messobjektes dient. Mit dieser Anordnung können sequentiell die totale Transmission des Beleuchtungslichtes durch das Objekt hindurch und die Reflektion des Beleuchtungslichtes an einer Oberfläche des Objektes gemessen werden.

In DE 10 2009 040 642 B3 sind ein Verfahren zur Messung von optischen Kenngrößen transparenter, streuender Messobjekte und eine Vorrichtung zur Durchführung dieses Verfahrens beschrieben, insbesondere vorgesehen zur inline-Messung verschiedener Transmissions- und Reflektionswerte von platten- oder bandförmigen Substraten, die in einer Beschichtungsanlage mit transparenten Schichten versehen werden.

Auch bei dem letztgenannten Verfahren wird das Messobjekt mittels einer Ulbrichtkugel mit diffusem Licht beleuchtet. Das durch das Messobjekt hindurchtretende Licht wird mittels zweier Fotodetektoren, deren Detektionsrichtungen voneinander abweichen, gleichzeitig erfasst, wobei in einer der beiden Detektionsrichtungen die direkt auf den Fotodetektor gerichtete Strahlung mittels einer Lichtfalle unterdrückt wird. Mit diesem Verfahren und der Vorrichtung zu dessen Durchführung ist es möglich, die diffuse Transmission Tdiffus und die totale Transmission Ttotal simultan zu ermitteln. Zusätzlich sind zwei weitere Fotodetektoren vorhanden, von denen einer die diffuse, der andere die totale Lichtreflektion von einer der Objektoberflächen erfasst.

Im Zusammenhang mit der Prozess- und Qualitätskontrolle bei der Herstellung von großflächigen beschichteten Substraten besteht häufig die Forderung, mit geringem technischen Aufwand sowohl die diffuse Transmission und die totale Transmission zu ermitteln als auch die Lichtreflektion an beiden Oberflächen des Substrates, also sowohl die Reflektion an der beschichteten Substratoberfläche als auch die Reflektion an der unbeschichteten Substratoberfläche. Mit den nach Stand der Technik verfügbaren Verfahren und Vorrichtungen ist diese Forderung nicht erfüllbar.

### Beschreibung der Erfindung

Der Erfindung liegt daher die Aufgabe zugrunde, ein Verfahren und mindestens eine Vorrichtung anzugeben, welche die vorbeschriebenen Nachteile des Standes der Technik nicht mehr aufweisen.

Erfindungsgemäß erfolgt die Messung der Transmissions- und Reflektionseigenschaften von großflächigen transluzenten Objekten, insbesondere die inline-Prozess- und Qualitätskontrolle bei der Herstellung von großflächigen beschichteten Substraten, nach den in Anspruch 1 angegebenen Verfahrensschritten.

Demnach erfolgt die Messung in einer ersten Variante des erfindungsgemäßen Verfahrens mit lediglich zwei diffuses Licht abstrahlenden Beleuchtungseinrichtungen und zwei Fotodetektoren, indem:
- eine erste Großfläche des Objektes mit einer ersten der Beleuchtungseinrichtungen beleuchtet und dabei gleichzeitig mit einem dem Objekt gegenüberliegenden ersten Fotodetektor die totalen Transmission und mit einem zweiten, auf der Seite dieser Großfläche befindlichen zweiten Fotodetektor die Reflektion an dieser Großfläche gemessen werden, und danach
- die zweite, der ersten gegenüberliegenden Großfläche des Objektes mit der andern Beleuchtungseinrichtung beleuchtet und dabei gleichzeitig mit dem zweiten Fotodetektor die diffuse Transmission und mit dem ersten Fotodetektor die Reflektion an dieser Großfläche gemessen werden.

In einer alternativen Variante des erfindungsgemäßen Verfahrens erfolgt die Messung ebenfalls mit lediglich zwei diffuses Licht abstrahlenden Beleuchtungseinrichtungen und zwei Fotodetektoren, indem:
- eine erste Großfläche des Objektes mit einer ersten der Beleuchtungseinrichtungen beleuchtet und dabei mit einem ersten Fotodetektor die totalen Transmission gemessen wird, und
- die zweite, der ersten gegenüberliegenden Großfläche des Objektes mit der zweiten Beleuchtungseinrichtung beleuchtet und dabei mit dem zweiten Fotodetektor die diffuse Transmission gemessen wird.

Ergänzende, optionale Messungen erfolgen, indem
- die erste Großfläche des Objektes mit der ersten Beleuchtungseinrichtung beleuchtet und dabei mit dem zweiten Fotodetektor die Reflektion an dieser Großfläche gemessen wird,
- die zweite Großfläche des Objektes mit der zweiten Beleuchtungseinrichtung beleuchtet und dabei mit dem ersten Fotodetektor die Reflektion an dieser Großfläche gemessen wird.

In beiden Varianten bildet die Abfolge der zwei bzw. vier Verfahrensschritte jeweils einen Messzyklus, mit dem die Transmissions- und Reflektionseigenschaften bezogen auf einen Bereich eines großflächigen transluzenten Objektes ermittelt werden. Die Reihenfolge der Verfahrensschritte innerhalb eines Messzyklus kann beliebig verändert und an eine jeweilige Messaufgabe angepasst werden. Im Rahmen der Erfindung liegt es auch, Messzyklen zu bilden, die sich lediglich auf die Ermittlung der beiden Transmissionswerte T_{diffus} und Tₜₒₜₐₗ oder die Ermittlung der Reflektionseigenschaften der sich gegenüberliegenden Oberflächen des Objektes beziehen.

Die während eines Messzyklus erfassten Messwerte werden an einen Rechner mit Auswertesoftware übermittelt, der mit einer Informationsausgabe verbunden ist, welche die ermittelten Werte sowohl für die diffuse und die totale Transmission als auch für die Reflektionseigenschaften beider Objektflächen zur Beurteilung oder Weiterverarbeitung bereitstellt, wie beispielsweise zur bereits genannten Verknüpfung Tdiffus/Ttotal*100% zu einem HAZE-Wert für die Trübung.

Ein bedeutender Vorteil des erfindungsgemäßen Verfahrens besteht darin, dass die Transmissions- und Reflektionseigenschaften mit einem in Vergleich zum Stand der Technik geringerem technischen ermittelt werden können, was für beide Verfahrensvarianten gilt.

Die beiden Beleuchtungseinrichtungen und die beiden Fotosensoren werden in Bezug aufeinander fest positioniert. In Bezug auf das Objekt wird eine der Beleuchtungseinrichtungen und einer der Fotodetektoren einer ersten Großfläche des Objektes räumlich zugeordnet, während die andere Beleuchtungsquelle und der zweite Fotodetektor der gegenüberliegenden Großfläche räumlich zugeordnet werden, und zwar so, dass sich jeweils eine Beleuchtungseinrichtung und ein Fotodetektor auf der einen und die andere Beleuchtungseinrichtung und der zweite Fotodetektor auf der anderen Seite des Objektes gegenüberliegen. Die Beleuchtungseinrichtungen liegen dabei vorzugsweise auf einer gemeinsamen Achse, im Sinne der Erfindung als Messachse bezeichnet, die eine Normale der Großflächen des Objektes ist.

Die Beleuchtungseinrichtungen werden stets abwechselnd eingeschaltet, so dass jeweils nur eine der beiden Großflächen zwecks Transmissionsmessung durchleuchtet bzw. zwecks Reflektionsmessung beleuchtet wird.

Als Fotodetektoren werden richtungsempfindliche Fotodetektoren verwendet. Zur Erzielung oder Verstärkung der Richtungsempfindlichkeit können den Fotodetektoren jeweils richtungsempfindliche Optiken vorgeordnet werden.

Die Detektionsrichtungen der beiden Fotodetektoren werden gegeneinander und gegen die Messachse geneigt ausgerichtet. In einer bevorzugten Ausgestaltung des Verfahrens werden die beiden Detektionsrichtungen und die Messachse so gegeneinander geneigt, dass sie sich in einem Punkt schneiden. Dieser Schnittpunkt kann vorteilhaft so gelegt werden, dass er sich innerhalb des Objektes zwischen den beiden Großflächen des Objektes befindet.

Die Detektionsrichtung eines der Fotodetektoren wird dabei so ausgerichtet, dass sie zwecks Reflektionsmessung stets auf eine Großfläche des Objektes sowie zwecks Messung der diffusen Transmission auf eine dem Objekt gegenüber liegende Lichtfalle weist, die den direkt gerichteten Anteil des Beleuchtungslichtes ausblendet, welches von der auf der gegenüberliegenden Objektseite befindlichen Beleuchtungseinrichtung her auf das Objekt trifft und dieses durchdringt.

Die Detektionsrichtung eines anderen Fotodetektors wird dabei so ausgerichtet, dass sie zwecks Reflektionsmessung stets auf die andere Großfläche des Objektes sowie zwecks Messung der totalen Transmission auf eine dem Objekt gegenüberliegende, das Beleuchtungslicht reflektierende Fläche weist, die den direkt gerichteten Anteil des Beleuchtungslichtes nicht ausblendet.

Weiterhin liegen die Messachse und die Detektionsrichtung des ersten Fotodetektors in einer ersten Messebene, während die Messachse und die Detektionsrichtung des zweiten Fotodetektors in einer zweiten Messebene liegen. Diese beiden Messebenen werden erfindungsgemäß so gelegt, dass sie bevorzugt einen Winkel α ≠ 180°, besonders bevorzugt einen Winkel α = 90° einschließen, um zu verhindern, dass bei der Reflektionsmessung die Detektionsrichtung des ersten Fotodetektors auf die Lichtfalle gerichtet ist und deshalb lediglich die Reflektion des diffusen Anteils des Beleuchtungslichtes misst. Der Winkel α = 180° wird demzufolge nur für Messaufgaben gewählt, bei denen ein Wert für die Reflektion des diffusen Anteils von Interesse ist.

Als Beleuchtungseinrichtungen werden bevorzugt Ulbrichtkugeln mit jeweils einer integrierten Lichtquelle verwendet. Dabei werden die Ulbrichtkugeln zu beiden Seiten des Objektes zentrisch auf der Messachse positioniert. Die Detektionsrichtungen der beiden Fotodetektoren sind gegensinnig in die jeweils gegenüberliegende Ulbrichtkugel gerichtet.

Das erfindungsgemäße Verfahren ist neben allgemeineren Anwendungsmöglichkeiten für Objekte verschiedener Art besonders vorteilhaft zur Qualitätskontrolle unmittelbar bei der Herstellung von oberflächenbeschichteten Substraten geeignet. Hierzu wird das Substrat an den beiden Beleuchtungseinrichtungen vorüber bewegt. Dabei werden in zeitlich aufeinander folgenden, periodisch wiederholten Messzyklen die beschriebenen optischen Kennwerte von Substratbereichen gewonnen, deren räumliche Ausdehnung, in Bewegungsrichtung betrachtet, bestimmt wird durch die Summe der Beleuchtungsdauern in den einzelnen Messphasen, durch die Summe der Zeitspannen zwischen den einzelnen Messphasen und durch die Geschwindigkeit, mit der das Substrat bewegt wird. Um diese räumliche Ausdehnung des jeweils zu messenden Substratbereiches so gering wie möglich zu halten, erfolgt die Beleuchtung des Substrates innerhalb eines jeden Messzyklus vorzugsweise stroboskopartig, so dass ein optimales Verhältnis zwischen der Dauer der Messung und der Geschwindigkeit der Substratbewegung erzielt wird.

Mit dem erfindungsgemäßen Verfahren kann die Messung der Transmissionseigenschaften nach den Vorgaben des internationalen Standards ASTM D 1003.

Gegenstand der Erfindung ist weiterhin eine optische Messvorrichtung zur Ausübung des erfindungsgemäßen Verfahrens. Diese Messvorrichtung umfasst prinzipiell:
- eine erste Beleuchtungseinrichtung in Form einer Ulbrichtkugel, von welcher durch eine Lichtaustrittsöffnung hindurch diffuses Licht auf eine erste Großfläche des Objektes gerichtet ist,
- eine zweite Beleuchtungseinrichtung in Form einer Ulbrichtkugel, von welcher durch eine Lichtaustrittsöffnung hindurch diffuses Licht auf die zweite, der ersten parallel gegenüberliegenden Großfläche des Objektes gerichtet ist,
- einen Fotodetektor, dessen Detektionsrichtung durch beide Lichtaustrittsöffnungen hindurch auf eine sich an der Innenwand der zweiten Beleuchtungseinrichtung befindende Lichtfalle weist, die den direkt gerichteten Anteil des Beleuchtungslichtes ausblendet,
- einen weiteren Fotodetektor, dessen Detektionsrichtung durch beide Lichtaustrittsöffnungen hindurch auf die Licht reflektierende Innenwand der ersten Beleuchtungseinrichtung weist.

Dabei weist jede Ulbrichtkugel eine ein- und ausschaltbare Lichtquelle auf, und beide Lichtquellen sind mit einer Ansteuerschaltung zum alternierenden Einschalten verbunden, wobei
- jede Beleuchtungseinrichtung eine ein- und ausschaltbare Lichtquelle aufweist, die mit einer Ansteuerschaltung zum alternierenden Einschalten verbunden ist, wobei
- zum Messen der diffusen Transmission und/oder zum Messen der Reflektion an der Großfläche die Lichtquelle in der ersten Beleuchtungseinrichtung eingeschaltet ist,
- zum Messen der totalen Transmission und/oder zum Messen der Reflektion an der Großfläche die Lichtquelle in der zweiten Beleuchtungseinrichtung eingeschaltet ist, und wobei
- die Fotodetektoren mindestens während der Einschaltdauer der Lichtquellen mit einer Auswerteschaltung verbunden sind.

Die Fotodetektoren sind vorzugsweise in die Innenwand der ihnen jeweils zugeordneten Ulbrichtkugel integriert.

Bei einer besonders bevorzugten Ausführungsform sind in den Ulbrichtkugeln Referenzfotodetektoren vorhanden, deren Detektionsrichtungen zwecks Gewinnung von Referenzsignalen auf die reflektierende Innenfläche der jeweiligen Ulbrichtkugel gerichtet ist. Außerdem sind innerhalb der Ulbrichtkugeln Abschirmmittel vorgesehen, die verhindern, dass Licht von der Lichtquelle direkt in die Fotodetektoren zur Messwertgewinnung als auch in die Fotodetektoren zur Referenzwertgewinnung einstrahlt.

Weiterhin sind die Detektionsrichtung der beiden Fotodetektoren und die Normale der Großflächen vorteilhaft so gegeneinander geneigt, dass sie einen gemeinsamen Schnittpunkt haben, der sich zwischen den beiden Großflächen innerhalb des Objektes befindet. Die Normale bildet dabei eine Messachse in Bezug auf die beiden Detektionsrichtungen.

Bevorzugt schließen die Detektionsrichtungen der beiden Fotodetektoren mit der Normalen bzw. der Messachse jeweils einen Winkel von 8° ein, so dass die Vorgabe des Standards ASTM D 1003 erfüllt ist.

Insbesondere im Hinblick auf die Gewinnung der Reflektionswerte liegen Detektionsrichtungen des ersten und des zweiten Fotosensors in unterschiedlichen Messebenen, beispielsweise in Messebenen, die um 90° um die Normale zueinander versetzt sind, um zu verhindern, dass bei der Reflektionsmessung die Detektionsrichtung des ersten Fotodetektors auf die Lichtfalle gerichtet ist und deshalb lediglich die Reflektion des diffusen Anteils des Beleuchtungslichtes misst, wie weiter unten anhand eines Ausführungsbeispiels noch zu erläutert ist.

Insbesondere für die Ausführungsformen der Erfindung, bei denen eine Relativbewegung zwischen dem Objekt und der Messvorrichtung vorgesehen ist, sind die Lichtaustrittsöffnungen der Ulbrichtkugeln in Abständen zum Objekt angeordnet, die eine ungehinderte Relativbewegung ermöglichen.

### Kurze Beschreibung der Zeichnungen

Die Erfindung wird nachfolgend anhand eines Ausführungsbeispiels näher erläutert. In den zugehörigen Zeichnungen zeigen:

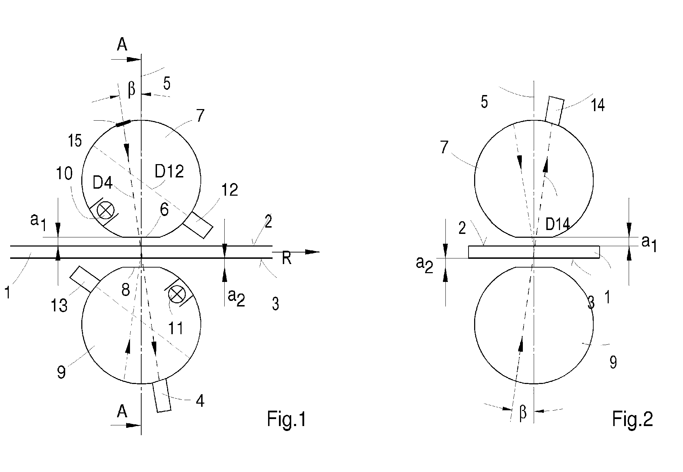

- Fig.1: eine Prinzipdarstellung der erfindungsgemäßen Messvorrichtung im Schnitt durch eine Ebene, in der die Messachse, die Detektionsrichtung eines von zwei Fotodetektoren und die Bewegungsrichtung eines großflächigen, einseitig beschichteten Substrates liegen, für das periodisch die Trübung und die Reflektionseigenschaften sowohl der beschichteten als auch der unbeschichteten Großfläche gemessen werden sollen,
- Fig.2: die Prinzipdarstellung der erfindungsgemäßen Messvorrichtung nach Fig.1, jedoch im Schnitt durch eine Ebene, in der die Messachse und die Detektionsrichtung des anderen Fotodetektors liegen, während die Bewegungsrichtung des Substrates senkrecht in die Zeichenebene hinein verläuft.

### Ausführliche Beschreibung der Zeichnungen

In Fig.1 ist symbolisch ein bandförmiges, transluzentes Objekt 1 dargestellt, hier beispielsweise ein Substrat, das an seiner Großfläche 2 in einer inline-Beschichtungsanlage mit einer transparenten, elektrisch leitfähigen Schicht versehen wird. Das Objekt 1 wird dabei fortlaufend in Richtung R bewegt und passiert dabei im Anschluss an den Beschichtungsprozess, wie aus Fig.1 ersichtlich, die erfindungsgemäße Messvorrichtung.

Die Qualitätskontrolle soll sich in dem hier gewählten Beispiel auf die Messung und Beurteilung der Transmissionseigenschaften des beschichteten Objektes und auf die Messung des Reflektionsvermögens sowohl der beschichteten Großfläche 2 als auch der unbeschichteten Großfläche 3 des Objektes 1 beziehen. Sie wird periodisch durchgeführt, während sich das Substratband kontinuierlich an der Messvorrichtung vorüber bewegt.

Zur Ermittlung der Transmissionseigenschaften ist die Messmethode nach der internationalen Norm ASTM D 1003 anzuwenden, wobei der total transmittierte Anteil Ttotal zu messen ist, der sowohl die gerichtete als auch die diffuse Transmission des Beleuchtungslicht umfasst, und der diffus transmittierte Anteil Tdiffus zu messen ist, der nur den diffusen Anteil des Beleuchtungslichtes umfasst. Die so ermittelten Transmissionswerte Tdiffus und Ttotal können anschließend nach der Funktion Tdiffus/Ttotal*100% zu einem HAZE-Wert für die Trübung weiterverarbeitet werden.

Die Reflektionseigenschaften für beide Großflächen 2, 3 sind jeweils anhand des reflektierten Beleuchtungslichtes zu bewerten.

Fig.1 zeig die erfindungsgemäße Messvorrichtung im Schnitt durch eine Ebene, in der ein Fotodetektor 4, dessen Detektionsrichtung D4, die Messachse 5, die zugleich eine Normale der Großflächen 2, 3 ist, und die Bewegungsrichtung R des Objektes 1 liegen. Die Detektionsrichtung D4 schließt mit der Messachse 5 vorzugsweise einen Winkel β = 8° ein, womit die Vorgabe der internationalen Norm erfüllt ist. Abweichende Winkelmaße sind selbstverständlich möglich, liefern jedoch abweichende Messergebnisse.

In einem Abstand a1 von der Großfläche 2 ist die Lichtaustrittsöffnung 6 einer diffuses Licht aussendenden Beleuchtungseinrichtung 7, ausgeführt als Ulbrichtkugel, angeordnet, die zur Beleuchtung des Objektes 1 von der beschichteten Großfläche 2 her dient. Dem Objekt 1 gegenüberliegend ist in einem Abstand a2 von der Großfläche 3 die Lichtaustrittsöffnung 8 einer weiteren diffuses Licht aussendenden Beleuchtungseinrichtung 9, ebenfalls ausgeführt als Ulbrichtkugel, angeordnet. Diese ist zur Beleuchtung des Objektes 1 von der Großfläche 3 her vorgesehen. Die Abstände a1 und a2 sind möglichst klein gehalten. Sie sind lediglich so groß, dass eine ungehinderte Bewegung des Objektes 1 relativ zu den beiden Beleuchtungseinrichtungen 7, 9 stattfinden kann.

In die Beleuchtungseinrichtung 7 ist eine Lichtquelle 10 integriert, in der Beleuchtungseinrichtung 9 befindet sich eine Lichtquelle 11. Beide Lichtquellen 10, 11 sind beispielsweise als kurzzeitig einschaltbare Hochleistungs-LED ausgeführt und zum Zweck des Einschaltens mit einer zeichnerisch nicht dargestellten Ansteuerschaltung verbunden. In der Beleuchtungseinrichtung 7 ist eine Lichtfalle 15 vorgesehen, auf welche die Detektionsrichtung D4 des Fotodetektors 4 gerichtet ist.

Um Verfälschungen der Charakteristik des von den Beleuchtungseinrichtungen 7, 9 austretenden und auf die jeweilige Großfläche 2, 3 treffenden Beleuchtungslichtes bewerten und in den Messergebnissen berücksichtigen zu können, die ihre Ursache zum Beispiel in Fremdlichteinstreuungen aufgrund der Abstände a1, a2 haben, sind in den beiden Beleuchtungseinrichtungen 7, 9 Referenzfotodetektoren 12 und 13 vorhanden, deren Detektionsrichtungen D12, D13 auf die reflektierende Innenwand der jeweiligen Beleuchtungseinrichtung 7, 9 gerichtet sind. Die Signalausgänge der Referenzfotodetektoren 12, 13 sind ebenso wie die Signalausgänge der Fotodetektoren 4, 14 mit einer nicht dargestellten Auswerteschaltung verbunden.

Der Fotodetektor 4 und die Referenzfotodetektoren 12, 13 sind so positioniert, dass aus direkter Richtung kein Licht von den Lichtquellen 10, 11 einfallen kann. Gegebenenfalls sind Abschirmmittel vorzusehen, um einen solchen direkten Lichteinfall und damit die Verfälschung der Messergebnisse zu vermeiden.

Fig.2 zeigt einen Schnitt A-A aus Fig.1. Aus Fig.2 sind wiederum das Objekt 1, hier jedoch in seiner Bandbreite, die Messachse 5, die symmetrisch zur Messachse 5 angeordneten Beleuchtungseinrichtungen 7 und 9, und die Abstände a1, a2 zwischen dem Objekt 1 und den Lichtaustrittsöffnungen 6 und 8 ersichtlich. Die Bewegungsrichtung des Objektes 1 verläuft hier senkrecht in die Zeichenebene hinein. Der Übersichtlichkeit halber wurde auf die Darstellungen des eigentlich in der Beleuchtungseinrichtung 9 sichtbaren Fotodetektors 4 und der Lichtquelle 11 sowie des eigentlich in der Beleuchtungseinrichtung 7 sichtbaren Referenzfotodetektors 12 verzichtet.

Zu erkennen sind in Fig.2 jedoch ein in dieser Ebene in die Beleuchtungseinrichtung 7 integrierter Fotodetektor 14 und dessen Detektionsrichtung D14, die auf die Innenfläche der gegenüberliegenden Beleuchtungseinrichtung 9 weist.

Wie aus der Zusammenschau von Fig.1 und Fig.2 erkennbar ist, liegen die Messachse 5 und die Detektionsrichtung D4 in der in Fig.1 dargestellten Ebene, die Messachse 5 und die Detektionsrichtung D14 dagegen in der in Fig.2 dargestellten Ebene. Beide Ebenen bilden Messebenen, die um 90° um die Messachse 5 zueinander verdreht sind. Die Referenzdetektionsrichtungen D12 und D13 liegen hier nur beispielhaft in der Ebene der Fig.1.

Das erfindungsgemäße Messverfahren wird in seiner ersten Variante mit dieser Vorrichtung wie folgt ausgeübt, wobei die Abfolge der genannten zwei Verfahrensschritte beliebig vorgegeben werden kann:
- die Großfläche 3 des Objektes 1 wird mit der ersten der Beleuchtungseinrichtungen 9 beleuchtet, wobei gleichzeitig mit dem Fotodetektor 14 die totalen Transmission und mit dem Fotodetektor 4 die Reflektion an dieser Großfläche 3 gemessen werden,
- die zweite, der ersten gegenüberliegenden Großfläche 2 des Objektes 1 wird mit der zweiten Beleuchtungseinrichtung 7 beleuchtet, wobei gleichzeitig dem zweiten Fotodetektor 4 die diffuse Transmission und mit dem Fotodetektor 14 mit die Reflektion an dieser Großfläche 2 gemessen werden.

Die zweite Variante des erfindungsgemäßen Messverfahrens wird kann mit dieser Vorrichtung wie folgt ausgeübt werden, wobei die Abfolge der genannten vier Verfahrensschritte beliebig vorgegeben werden kann, wobei die beiden letztgenannten, die Messung der Reflektion betreffend, optional sind:
- das Objekt 1 wird mittels einer ersten Beleuchtungseinrichtung 9 durchleuchtet und dabei mit einem ersten Fotodetektor 14 die totale Transmission gemessen,
- das Objekt 1 wird mit der zweiten Beleuchtungseinrichtung 7 durchleuchtet und dabei mit dem zweiten Fotodetektor 4 die diffuse Transmission gemessen,
- die erste Großfläche 3 des Objektes 1 wird mit der ersten Beleuchtungseinrichtung 9 beleuchtet und dabei mit dem zweiten Fotodetektor 4 die Reflektion an dieser Großfläche 3 gemessen,
- die zweite Großfläche 2 des Objektes 1 wird mit der zweiten Beleuchtungseinrichtung 7 beleuchtet und dabei mit dem ersten Fotodetektor 14 die Reflektion an dieser Großfläche 2 gemessen.

Wie weiter oben bereits beschrieben, bilden Verfahrensschritte in beiden Verfahrensvarianten jeweils einen Messzyklus. Die von den beiden Fotodetektoren 4 und 14 während der Messzyklen erfassten Messwerte werden an einen Rechner mit Auswertesoftware übermittelt, in dem die ermittelten Werte für die diffuse und die totale Transmission als auch für die Reflektionseigenschaften beider Großflächen 2, 3 bewertet oder weiterverarbeitet werden, wie beispielsweise durch Verknüpfung Tdiffus/Ttotal*100% zu einem HAZE-Wert für die Trübung.

### Bezuaszeichenliste

- 1: Objekt
- 2: Großfläche
- 3: Großfläche
- 4: Fotodetektor
- 5: Messachse
- 6: Lichtaustrittsöffnung
- 7: Beleuchtungseinrichtung
- 8: Lichtaustrittsöffnung
- 9: Beleuchtungseinrichtung
- 10: Lichtquelle
- 11: Lichtquelle
- 12: Referenzfotodetektor
- 13: Referenzfotodetektor
- 14: Fotodetektor
- 15: Lichtfalle

## Patentansprüche

1. Optisches Messverfahren zur Messung der Transmissions- und Reflektionseigenschaften von insbesondere großflächigen transluzenten Objekten (1), bevorzugt anwendbar zur Prozess- und Qualitätskontrolle bei der Herstellung von oberflächenbeschichteten Substraten, wobei
- die Messung mit zwei diffuses Licht abstrahlenden Beleuchtungseinrichtungen (7, 9) und zwei Fotodetektoren (4, 14) vorgenommen wird, indem entweder:
- eine erste Großfläche (3) des Objektes (1) mit einer ersten der Beleuchtungseinrichtungen (9) beleuchtet und dabei gleichzeitig die totalen Transmission mit einem ersten Fotodetektor (14) und die Reflektion an dieser Großfläche (3) mit dem zweiten Fotodetektor (4) gemessen werden, und danach
- die zweite, der ersten gegenüberliegenden Großfläche (2) des Objektes (1) mit der zweiten Beleuchtungseinrichtung (7) beleuchtet und dabei gleichzeitig die diffuse Transmission mit dem zweiten Fotodetektor (4) und die Reflektion an dieser Großfläche (2) mit dem ersten Fotodetektor (14) gemessen werden,
oder sequentiell in beliebiger Folge:
- eine erste Großfläche (3) des Objektes (1) mit einer ersten der Beleuchtungseinrichtungen (9) beleuchtet und dabei die totalen Transmission mit einem ersten Fotodetektor (14) gemessen wird,
- die zweite, der ersten gegenüberliegenden Großfläche (2) des Objektes (1) mit der zweiten Beleuchtungseinrichtung (7) beleuchtet und dabei die diffuse Transmission mit dem zweiten Fotodetektor (4) gemessen wird.

2. Optisches Messverfahren nach Anspruch 1, bei dem im Falle einer sequentiellen Messung zusätzlich
- die erste Großfläche (3) des Objektes (1) mit der ersten Beleuchtungseinrichtung (9) beleuchtet und dabei die Reflektion an dieser Großfläche (3) mit dem zweiten Fotodetektor (4) gemessen wird, und / oder
- die zweite Großfläche (2) des Objektes (1) mit der zweiten Beleuchtungseinrichtung (7) beleuchtet und dabei die Reflektion an dieser Großfläche (2) mit dem ersten Fotodetektor (14) gemessen wird.

3. Optisches Messverfahren nach Anspruch 1 oder 2, bei dem
- die beiden Beleuchtungseinrichtungen (7, 9) und die beiden Fotosensoren (4, 14) in Bezug aufeinander fest positioniert werden,
- in Relation zum Objekt (1) eine Beleuchtungseinrichtung (9) und ein Fotodetektor (4) einer ersten Großfläche (3) des Objektes (1) räumlich zugeordnet wird und die andere Beleuchtungsquelle (7) und der zweite Fotodetektor (14) der gegenüberliegenden Großfläche (2) räumlich zugeordnet wird, und
- die Beleuchtungseinrichtungen (7, 9) stets abwechselnd eingeschaltet werden, so dass jeweils nur eine der beiden Großflächen (2, 3) beleuchtet wird.

4. Optisches Messverfahren nach einem der vorgenannten Ansprüche, bei dem richtungsempfindliche Fotodetektoren (4, 14) verwendet werden oder den Fotodetektoren (4, 14) jeweils eine richtungsempfindliche Optik vorgeordnet wird.

5. Optisches Messverfahren nach einem der vorgenannten Ansprüche, bei dem als Beleuchtungseinrichtungen (7, 9) Ulbrichtkugeln mit jeweils einer integrierten Lichtquelle (10, 11) verwendet werden.

6. Optisches Messverfahren nach einem der vorgenannten Ansprüche, bei dem
- das Objekt (1) an den beiden Beleuchtungseinrichtungen (7, 9) vorüberbewegt wird,
- die räumliche Ausdehnung eines während einer Messung gemessenen Objektbereiches in Bewegungsrichtung R bestimmt wird
- durch die jeweilige Beleuchtungsdauer,
- die zeitlichen Abstände zwischen den einzelnen Messungen, und
- die Bewegungsgeschwindigkeit des Objektes (1), und
- die Messungen periodisch wiederholt werden, um eine Vielzahl von Objektbereichen zu messen.

7. Optisches Messverfahren nach einem der vorgenannten Ansprüche, bei dem die Messung der Transmissionseigenschaften nach den Vorgaben des internationalen Standards ASTM D 1003 vorgenommen wird.

8. Optisches Messverfahren nach einem der vorgenannten Ansprüche, bei dem aus den Messergebnissen für die totale und die diffuse Transmission ein HAZE-Wert für die Trübung des Objektes (1) bestimmt wird nach der Funktion HAZE = Tdiffus/Ttotal*100%.

9. Optische Messvorrichtung zur Ermittlung der Transmissions- und Reflexionseigenschaften von großflächigen transluzenten Objekten (1), vorzugsweise in Form beschichteter Substrate, die fortlaufend an der Messvorrichtung vorüberbewegt werden, umfassend:
- eine erste Beleuchtungseinrichtung (9), ausgeführt als Ulbrichtkugel, von welcher durch eine Lichtaustrittsöffnung (8) hindurch Licht auf eine erste Großfläche (3) des Objektes (1) gerichtet ist,
- eine zweite Beleuchtungseinrichtung (7), ausgeführt als Ulbrichtkugel, von welcher durch eine Lichtaustrittsöffnung (6) hindurch Licht auf die der ersten gegenüberliegenden Großfläche (2) des Objektes (1) gerichtet ist,
- einen richtungsempfindlichen Fotodetektor (4), dessen Detektionsrichtung (D4) durch beide Lichtaustrittsöffnungen (6, 8) hindurch auf eine sich an der Innenwand der zweiten Beleuchtungseinrichtung (7) befindende Lichtfalle (15) weist,
- einen richtungsempfindlichen Fotodetektor (14), dessen Detektionsrichtung (D14) durch beide Lichtaustrittsöffnungen (6, 8) hindurch auf die reflektierende Innenwand der ersten Beleuchtungseinrichtung (9) weist, wobei
- die Detektionsrichtungen (D4, D14) in voneinander verschiedenen Messebenen liegen.

10. Optische Messvorrichtung nach Anspruch 9, bei welcher
- jede Beleuchtungseinrichtung (7, 9) eine ein- und ausschaltbare Lichtquelle (10, 11) aufweist, die mit einer Ansteuerschaltung zum alternierenden Einschalten verbunden ist, wobei
- zum Messen der diffusen Transmission und/oder zum Messen der Reflektion an der Großfläche (3) die Lichtquelle (11) in der ersten Beleuchtungseinrichtung (9) eingeschaltet ist,
- zum Messen der totalen Transmission und/oder zum Messen der Reflektion an der Großfläche (2) die Lichtquelle (10) in der zweiten Beleuchtungseinrichtung (7) eingeschaltet ist, und wobei
- die Fotodetektoren (4, 14) mindestens während der Einschaltdauer der Lichtquellen (10, 11) mit einer Auswerteschaltung verbunden sind.

11. Optische Messvorrichtung nach Anspruch 10, bei welcher der Fotodetektor (4) in die Innenwand der ersten Beleuchtungseinrichtung (9) und der Fotodetektor (14) in die Innenwand der zweiten Beleuchtungseinrichtung (7) integriert ist.

12. Optische Messvorrichtung nach Anspruch 10 oder 11, bei welcher
- in den Beleuchtungseinrichtungen (7, 9) jeweils ein Referenzfotodetektor (12, 13) zwecks Gewinnung eines Referenzsignals für das Beleuchtungslicht vorhanden ist, und
- innerhalb der Beleuchtungseinrichtungen (7, 9) Abschirmmittel vorgesehen sind, welche die direkte Lichteinstrahlung von der jeweiligen Lichtquelle (10, 11) in die Fotodetektoren (4, 12, 13, 14) verhindern.

13. Optische Messvorrichtung nach einem der Ansprüche 9 bis 12, bei der die Detektionsrichtung (D4) des Fotodetektors (4), die Detektionsrichtung (D14) des Fotodetektors (14) und die Normale der Großflächen (2, 3) gegeneinander geneigt sind, wobei sie vorzugsweise einen gemeinsamen Schnittpunkt haben, der sich zwischen den beiden Großflächen (2, 3) innerhalb des Objektes (1) befindet.

14. Optische Messvorrichtung nach Anspruch 13, bei der die Detektionsrichtungen (D4, D14) der beiden Fotodetektoren (4, 14) jeweils einen Winkel von β = 8° mit der Normalen einschließen.

15. Optische Messvorrichtung nach Anspruch 13 oder 14, bei der die voneinander verschiedenen Messebenen, in denen die Detektionsrichtungen (D4, D14) liegen, um einen Winkel α = 90 ° um die Normale zueinander versetzt sind.

16. Optische Messvorrichtung nach einem der Ansprüche 9 bis 15, bei der die Lichtaustrittsöffnungen (6, 8) der Beleuchtungseinrichtungen (7, 9) mit Abständen (a1, a2) zum Objekt (1) angeordnet sind, der eine ungehinderte Relativbewegung zwischen dem Objekt (1) und den Beleuchtungseinrichtungen (7, 9) ermöglicht.
